# EUROPEAN PATENT APPLICATION

(11) **EP 1 231 149 A1**
(43) Date of publication of application: **14.08.2002**
(21) Application number: 02250886.5
(22) Date of filing: 08.02.2002
(51) Int. Cl.: B65B 51/22, B29C 65/02

(54) **High frequency heat-sealing apparatus**

(30) Priority: 09.02.2001 JP 2001034507
(71) Applicant: Shikoku Kakoki Co., Ltd., Itano-gun, Tokushima-ken 771-0202 (JP)
(72) Inventor: Kume, Satoshi.c/o Shikoku Kakoki Co. Ltd., Itano-gun,Tokushima-ken 771-0202 (JP); Fujimoto, Akimasa.c/o Shikoku Kakoki Co. Ltd., Itano-gun,Tokushima-ken 771-0202 (JP); Ogasawara, Takeshi.c/o Nippon Paper Industries Co., Kita-ku, Tokyo-to 114-0002 (JP); Okude, Hideki.c/o Nippon Paper Industries Co., Kita-ku, Tokyo-to 114-0002 (JP)
(74) Representative: Tanner, James Percival

(57) **Abstract**

To provide a heat-sealing apparatus capable of achieving an excellent heat-sealing even when heat-sealing under severe conditions with a fluid, such as when filling/packing a vegetable juice abundant in water-insoluble vegetable fiber. The high-frequency heat-sealing apparatus is comprised of an openable-and-closable sealing jaw 23 and opposing jaw 25 which transversely heat-seals a tubular packing material with a fluid, wherein a ridge 31 shaped to contain a partial curve is so formed on the action face of a high-frequency coil 22 flush with the action face of the sealing jaw that it can press the central portion of a sealed zone having two rounded and narrowed right and left sides, a groove 34 which forms a molten thermoplastic resin puddle is formed on the action face adjacent to the outer side on the container's interior side of a sealed zone, and in addition, a flash portion 33 for a molten resin is formed adjacent to the outer side on the cutting side of a high-frequency coil. It is preferable to make the action face between the ridge and groove an inclined face 36.

## Description

### BACKGROUND OF THE INVENTION

### FIELD OF THE INVENTION

The present invention relates to a high-frequency heat-sealing apparatus for use in a filling/packing machine for producing liquid beverages or the like which are packed in paper containers so that they can be stored for a long time, and more particularly, to a high-frequency heat-sealing apparatus which adopts a sealing method wherein a tubular packing material filled with contents such as liquid beverages or the like is transversely high-frequency heat-sealed with a fluid and a molten thermoplastic resin in the innermost layer of the packing material is guided to flow out of a sealed zone.

### DESCRIPTION OF THE RELATED ART

Hitherto, when a packing container having a box shape or the like filled with a liquid such as juice in a sealed manner is to be produced, as seen in Japanese Patent Publication No. 3215/1980, it is well known to use a sealing apparatus in which a packing material of a laminate of paper, an aluminum foil and a synthetic resin is used and continuously formed into a tubular shape while being conveyed. The tubular packing material is transversely heat-sealed with a fluid by using pressing means including a sealing jaw having a high-frequency coil and an opposing jaw having a sealing rubber of a hard rubber, and is cut between two sealed zones having been heat-sealed by a cutting blade.

Moreover, in Japanese Patent Laid-Open Nos. 134744/1983, 269854/1993, 164523/1995 and 240607/1997, there are other disclosures of a heat-sealing apparatus for heat-sealing a laminate material in which a ridge having a rectangular shape in the cross section is formed on the action face of a high-frequency coil on a sealing jaw in the aforementioned heat-sealing apparatus so that the molten resin is extruded into a sealed zone by the ridge. In order to avoid a problem of the aforementioned heat-sealing apparatus that when the molten resin is guided to flow toward the container's interior side of the sealed portion of a tubular packing material, corrugated molten resin beads are formed on the edge portion of the container's interior side so that cracks start from the crests of the beads to break the container when an external force is applied to the container, two magnetic members are arranged on the outer side (or on the container's interior side) of the straight portions of a U-shaped high-frequency coil to leave the portion of the container's interior side unheated, as disclosed in Japanese Patent No. 2,571,977.

Furthermore, in Japanese Patent Laid-Open No. 230834/1996, it is described that in the aforementioned heat-sealing apparatus, a high-frequency coil, which has a ridge in its longitudinal direction and grooves formed on the two sides of and in parallel with the ridge, causes molten resin to remain in the grooves without flowing out of a sealed zone, even if the resin on the packing material is melted and pushed by the ridge. In Japanese Patent Laid-Open No. 244728/1996, it is described that in the aforementioned heat-sealing apparatus, there is the use of a high-frequency coil which is inclined gradually at the more distance as the sealed zone forming portion goes to the outer side (to the container's interior side), so that the tube is heat-sealed whereby the liquid and the molten resin are discharged smoothly from the sealed zone to the container's interior side, when the tube is pressed together with a fluid.

In addition, Japanese Patent Laid-Open No. 53110/2000 discloses a sealing apparatus for shaping a packing material of a laminate including a synthetic resin layer into a tubular shape and for heat-sealing the tubular packing material transversely together with a fluid by using a pair of openable-and-closable pressing members including a heating mechanism, wherein a groove capable of forming a synthetic resin puddle adjacent to the outer side on the container's interior side of a sealed zone is formed on the action face of at least one of the pressing members, whereby complete sealing is achieved by guiding the liquid and dirt that have entered the very small corrugations of the inner face of the tube to flow out of the sealed zone together with the molten resin, and heat-sealing excellent in compressive strength where there is no generation of cracks due to the molten resin that had flown into the container's interior side is achieved.

Moreover, in Japanese Patent Laid-Open No. 103413/2000, it is disclosed that a high-frequency heat-sealing apparatus comprising a pair of openable-and-closable pressing members including a high-frequency heating mechanism for shaping a packing material of a laminate including a synthetic resin layer and a conductive material layer into a tubular shape and for heat-sealing the tubular packing material transversely together with a fluid, wherein a ridge shaped to contain an arcuate partial curve in its transverse contour is so formed on the action face of a high-frequency coil flush with the action face of one of the pressing members that it can press the central portion of a sealed zone having two rounded and narrowed right and left sides, and wherein a flash portion for a molten thermoplastic resin is formed adjacent to the outer side on the cutting side of the high-frequency coil, thereby achieving excellent sealing wherein no contaminants such as liquid beverages exist between the thermoplastic material layer, over the whole area of the longitudinal direction of the sealed zone, including the right and left side portions of the longitudinal direction of the sealed zone when high-frequency heated, where the width of the sealed zone is narrower compared to the width of the non-side portion.

In Japanese Patent Laid-Open No. 52025/1987, it is disclosed that when an electric current flows in a high-frequency coil, a high-frequency electromagnetic field is generated around the high-frequency coil and induces an eddy current in a conductive material such as an aluminum foil, so that heat is generated in the conductive material by the eddy current to heat and melt a thermoplastic resin adjacent to the conductive material. However, the eddy current thus induced establishes round electric circuits at the two end portions of the conductive material such as an aluminum foil, so that the heated regions at the two end portions are also rounded to narrow the width of the thermoplastic material layer to be melted at the two end portions. It is also disclosed a high-frequency coil which has a linear ridge for pressing the center parts of the sealed zone, at the two narrowed right and left side portions or at the non-side portion of the sealed zone.

### AN OBJECT TO BE ATTAINED

In order to effect the heat-sealing properly in a high-frequency heat-sealing apparatus for transversely heat-sealing a tubular packing material filled with contents such as a liquid beverage in the presence of the liquid, it is necessary to press the thermoplastic material layers melted by the high-frequency heating, with a ridge provided on the high-frequency coil and to extrude the molten thermoplastic resin together with contaminants such as liquid beverages or the like existing between the thermoplastic material layers, from under the ridge to the two sides of the same, thereby forming a thin layer of the thermoplastic resin containing no contaminant below the ridge. However, the inner side of the tube with contact to liquid is not necessarily completely flat, and when noting minute details, a very small corrugation is found. In the heat-sealing apparatus indicated in the aforementioned Japanese Patent Laid-Open Nos. 134744/1983, 269854/1993, 164523/1995, 218805/1996, and 230834/1996, the liquid and dirt that have entered the very small corrugation of the inner face of the tube could not be guided to flow out of the sealed zone, since it adopted a sealing method wherein the molten resin was not guided to flow out of the sealed zone but remained in the sealed zone, and thus it could not be said that the sealing was sufficient.

On the other hand, the present inventors discovered that in order to discharge the liquid and dirt that had entered the corrugation when sealing, the liquid in the sealed zone should be guided to flow out of the sealed zone together with the molten resin, and thus the invention described in the aforementioned Japanese Patent Laid-Open No. 244728/1996 had been completed. However, it was found out that in this method of using this heat-sealing apparatus, although the liquid and dirt that had entered the corrugation were completely discharged and excellent sealing could be obtained, there were cases wherein the molten resin that had flown into the container's interior side did not protrude equally, thereby forming corrugated molten resin beads on the edge portion on the container's interior side, and when pressure was applied to the container during the second operation using machinery such as a forming machine after the sealing operation, cracks started from the crests of the beads, thereby very rarely generating a leak. Consequently, the present inventors developed a heat-sealing apparatus where there is a sufficient flow of resin and the compressive strength of the container will never be decreased, and more particularly, a heat-sealing apparatus described in the aforementioned Japanese Patent Laid-Open No. 53110/2000, which can achieve complete sealing by guiding the liquid and dirt that had entered the very small corrugation of the inner face of the tube to flow out of the sealed zone together with the molten resin, and can achieve heat-sealing excellent in compressive strength where no cracks are produced by the molten resin that has flown into the container's interior side.

On the other hand, as described in the aforementioned Japanese Patent Laid-Open No. 52025/1987, if the tubular packing material having an aluminum foil is heated with the U-shaped high-frequency coil, its heating pattern forms a loop. As a result, the widths of the two right and left side portions of the sealed zone in the longitudinal direction are made narrower than that of the non-side portion. For example, when the heat-sealing is effected by using a high-frequency heat-sealing apparatus which is equipped with a high-frequency coil having a linear ridge of a mismatched heating pattern such as a linear ridge for pressing the widthwise center of the non-side portion of the sealed zone, the ridge may press the non-molten region of the two right and left end portions of the tubular packing material, thus causing a problem that defective sealing may occur. Consequently, the present inventors developed a heat-sealing apparatus described in the aforementioned Japanese Patent Laid-Open No. 103413/2000 that can achieve satisfactory sealing, wherein the width of the sealed zone is made narrower than that of the non-side portion, and no contaminants such as liquid beverages or the like exist between the thermoplastic material layers, over the whole area of the longitudinal direction of the sealed zone, including the right and left side portions of the longitudinal direction of the sealed zone when high-frequency heating is effected.

It can be said that the heat-sealing apparatuses described in the aforementioned Japanese Patent Laid-Open Nos. 53110/2000 and 103413/2000 have high quality as a heat-sealing apparatus, however, even with the use of these high quality heat-sealing apparatuses, its heat-sealing performance had not always been sufficient under severe conditions such as with a fluid. For example, when a vegetable juice abundant in water-insoluble vegetable fiber is high-frequency heat-sealed with a fluid by using the aforementioned heat-sealing apparatuses, although the cause is unknown, there were cases wherein products with defective sealing were detected at a proportion of a few to a million. An object of the present invention is to provide a very high quality heat-sealing apparatus capable of achieving an excellent heat-sealing, wherein no defective sealing is generated even when heat-sealing under severe conditions with a fluid, such as when filling/packing a vegetable juice abundant in water-insoluble vegetable fiber.

### MEANS TO ATTAIN THE OBJECT

In order to achieve the aforementioned object, the inventors of the present invention have conducted intensive study, and manufactured many prototype heat-sealing apparatuses, where test run using a vegetable juice abundant in water-insoluble vegetable fiber as a filling liquid was operated to all of these. It was discovered that when a high-frequency heat-sealing apparatus is used wherein one continuous linear ridge shaped to contain a partial curve which can press the central portion of the sealed zone is provided on the action face of the high-frequency coil, a groove which can form a molten thermoplastic resin puddle on the action face adjacent to the outer side on the container's interior side of the sealed zone is provided, and a flash portion for a molten thermoplastic resin adjacent to the outer side on the cutting side of the high-frequency coil is provided, an excellent heat-sealing can be achieved wherein defective sealing is not produced even when heat-sealing under severe conditions with a fluid, such as when filling/packing a vegetable juice abundant in water-insoluble vegetable fiber, and thus the present invention had been completed.

The present invention relates to a high-frequency heat-sealing apparatus comprising a pair of openable-and-closable pressing members including a high-frequency heating mechanism for shaping a packing material of a laminate including a thermoplastic resin layer and a conductive material layer into a tubular shape and for heat-sealing the tubular packing material transversely together with a fluid, wherein a ridge shaped to contain a partial curve is so formed on the action face of a high-frequency coil flush with the action face of one of the pressing members that it can press the central portion of a sealed zone having two rounded and narrowed right and left sides, and wherein a groove is provided on the action face adjacent to the outer side on the container's interior side of the sealed zone so as to form a molten thermoplastic resin puddle, and wherein a flash portion for a molten thermoplastic resin is formed adjacent to the outer side on the cutting side of the high-frequency coil.

Moreover, the present invention relates to the aforementioned high-frequency heat-sealing apparatus wherein the action face between the ridge and the groove is inclined so that the interval of the paired pressing members when pressed broadens gradually as it goes toward the groove, the aforementioned high-frequency heat-sealing apparatus wherein a band-shaped magnetic member adjacent to the outer side on the container's interior side of the high-frequency coil is formed, the aforementioned high-frequency heat-sealing apparatus wherein the ridge which can press the central portion of the sealed zone is one continuous linear ridge which traverses over the whole area of the longitudinal direction of the sealed zone, the aforementioned high-frequency heat-sealing apparatus wherein the transverse contour of the ridge which can press the central portion of the sealed zone is arcuate, and the aforementioned heat-sealing apparatus wherein said groove is arcuate in its cross section and the depth of the groove is no greater than one half the size of its width.

### BRIEF EXPLANATION OF DRAWINGS

Fig. 1 is a schematic perspective view of a filling/packing machine.

Fig. 2 is a perspective view of a transverse sealing apparatus.

Fig. 3 is a schematic longitudinal section of a high-frequency heat-sealing apparatus of the present invention.

Fig. 4 is an explanatory diagram of a sealed zone when high-frequency heat-sealing is effected.

Fig. 5 is an enlarged diagram of a portion of the edge portion of a sealed zone of Fig. 4.

Fig. 6 is an explanatory diagram of a high-frequency heat-sealing apparatus of the present invention which is equipped with a high-frequency coil provided with one linear ridge.

Fig. 7 is an explanatory diagram of a high-frequency heat-sealing apparatus of the present invention which is equipped with a high-frequency coil provided with two short ridges.

### DETAILED DESCRIPTION OF THE PREFERRED EMBODIMENTS

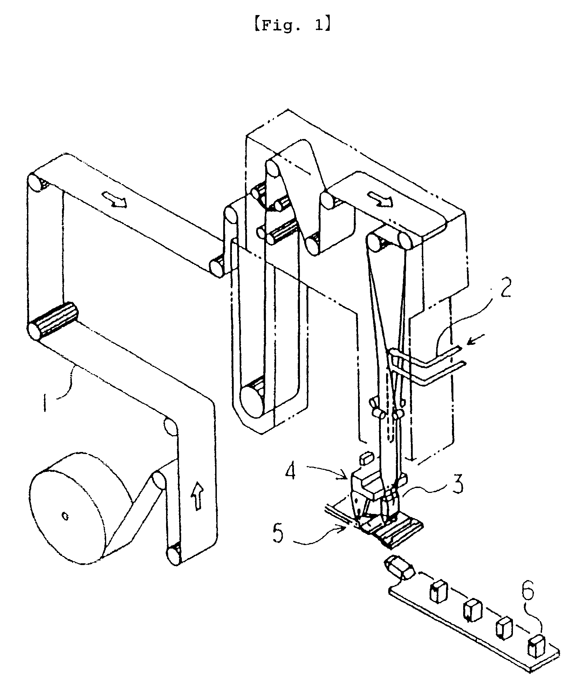

A filling/packing machine, in which a high-frequency heat-sealing apparatus according to the present invention is used, can be exemplified, as shown in Fig. 1, by a filling/packing machine comprising: a rewinder supporting a packing material web 1 in a roll shape; a rewinding apparatus for rewinding the web sequentially from the rewinder; a tube shaping apparatus for shaping the rewound web, after sterilized, into a tubular shape; a liquid supply pipe 2 for filling the tubular web with a fluid content; a transverse sealing apparatus 4 for transversely sealing the tube filled with the content, while being fed downward by a length substantially corresponding to one container, to continuously shape pillow-shaped container 3; a cutting apparatus 5 disposed below the transverse sealing apparatus for cutting the sealed portions of the pillow-shaped containers in the suspended state to separate the containers one by one; and a container shaping apparatus for bending the end portions of the pillow-shaped containers 3 separated, to shape them into box-shaped containers 6 in a final shape.

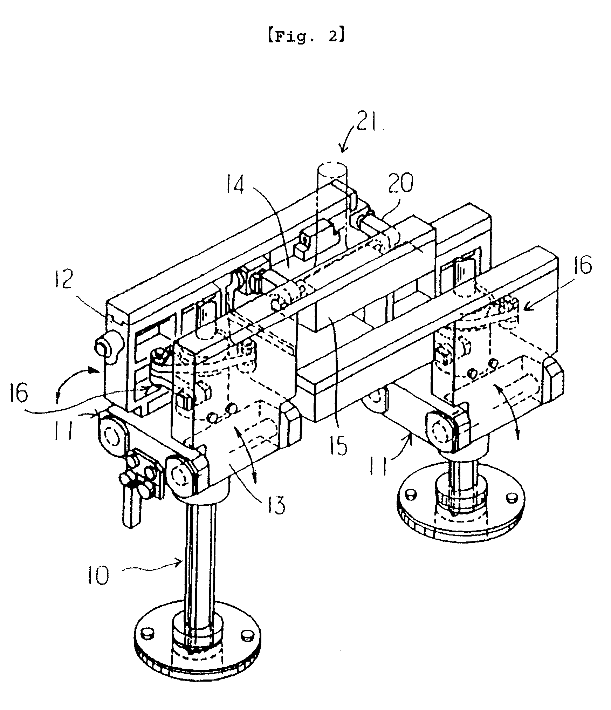

As the aforementioned transverse sealing apparatus 4, there can be used one disclosed in Japanese Patent Publication No. 23366/1989, for example. This transverse sealing apparatus 4 is constructed, as shown in Fig. 2, to include: a vertical rod 10 made movable up and down and rotatable back and forth; a lift frame 11 made movable up and down together with the vertical rod 10 and mounted on the vertical rod 10; a pair of front and back rocking arms 12 and 13 individually supported on the lift frames 11 so that they can rock at their lower portions on a pair of horizontal axes parallel to each other; pressing members 14 and 15 provided with a pair of front and back high-frequency coils individually fixed to oppose each other on the upper portions of the individual rocking arms 12 and 13; an arm opening/closing device 16 for rocking the two rocking arms 12 and 13 between a closed position, in which the two pressing members 14 and 15 approach each other, and an open position in which they are apart from each other; and a press apparatus 20 for pulling the two rocking arms 12 and 13 to each other in the closed position to generate a sealing pressure between the two pressing members 14 and 15.

The packing material, as made of a laminate including a thermoplastic resin layer and a conductive material layer in the present invention, may be any of laminates which include a thermoplastic resin layer such as polyethylene, capable of heat-sealing on its innermost face by heating means, and a conductive material layer to be heated by high-frequency heating, and the conductive material layer is preferred to be made of an aluminum foil layer for preventing light or oxygen from entering the inside of a container. From the standpoint of keeping the rigidity of the container, it is preferable to use a laminate having a paper sheet layer. Moreover, this packing material is shaped into a tubular shape by thermally welding its longitudinal end edge portions without any liquid by the method known in the related art.

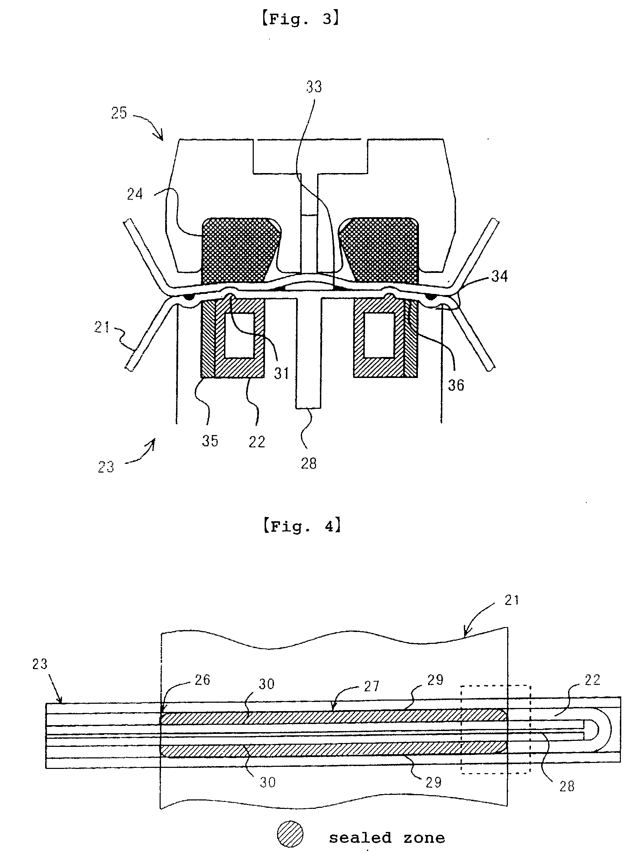

The high-frequency heat-sealing apparatus of the present invention is constructed to include the paired openable-and-closable pressing members 14 and 15, which are equipped with a high-frequency heating mechanism for heat-sealing such tubular packing material 21 transversely with the fluid. The paired pressing members 14 and 15 in this high-frequency heat-sealing apparatus , as shown in Fig. 3, are usually composed of a pressing member equipped with a high-frequency coil 22 as the heating source (hereinafter "sealing jaw 23"), and a pressing member not equipped with the same but made of a rigid rubber 24 or the like (hereinafter "opposing jaw 25"). Heat-sealing can be achieved by pressing the tubular packing material transversely with the fluid by using said sealing jaw 23 and opposing jaw 25, thereby forming a sealed zone wherein heat and pressure is applied to the thermoplastic resin layer in the innermost face of the packing material.

As the high-frequency heat-sealing apparatus in the present invention, there are no particular limitations as long as it is equipped with a high-frequency coil 22 wherein a ridge 31 or ridge 32 (hereinafter "ridge 31", except when necessary) shaped to contain a partial curve is formed on its action face for pressing the central portion of the sealed zone, a groove 34 provided to form a molten thermoplastic resin puddle on the action face adjacent to the outer side on the container's interior side of the sealed zone, and a flash portion 33 for the molten thermoplastic resin formed adjacent to the outer side on the cutting side of the high-frequency coil. However, as shown in Fig. 3 or Figs. 6 and 7, a magnetic member 35 made of band-shaped or sheet-shaped ferrite or the like is desirably disposed adjacent to the outer side, as located on the container's interior side, of the high-frequency coil having a flat action face. By providing this band-shaped magnetic member 35 formed adjacent to the outer side on the container's interior side, the magnetic lines of force, as emitted from the high-frequency coil, are deflected toward the sealed zone by the magnetic member so that the outer side of the tubular packing material, as located at the high-frequency coil on the container's interior side, that is, the end edge portion of the sealed zone on the container's interior side is not heated to an unnecessary temperature.

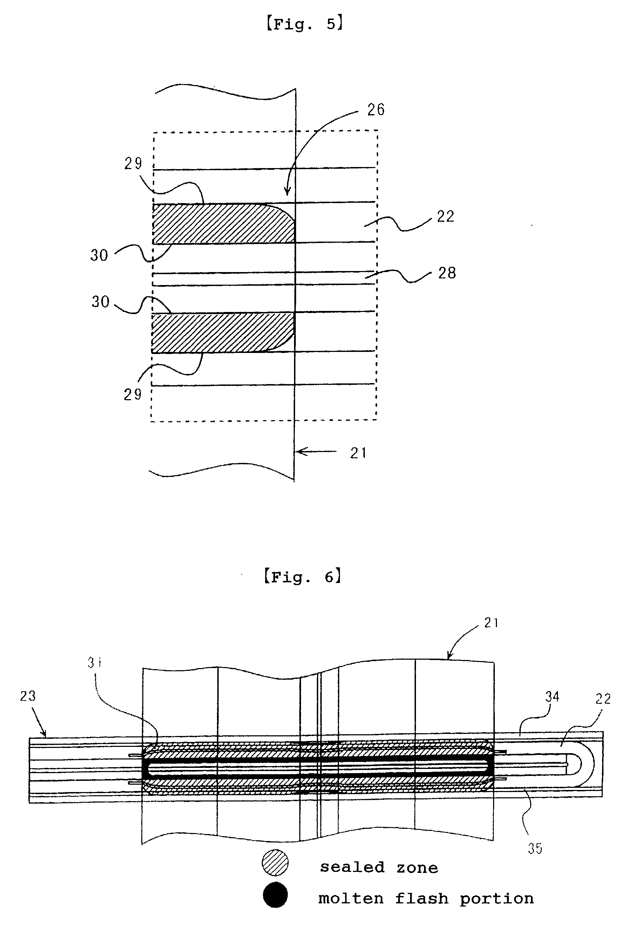

In a high-frequency heat-sealing apparatus, as mentioned above, a high-frequency heating mechanism is used as means for heating a tubular packing material, and this high-frequency heating mechanism is equipped with a high-frequency coil 22, as mentioned previously. Fig. 4 is a diagram explaining a sealed zone when high-frequency heat-sealing is effected, and Fig. 5 is an enlarged diagram of a portion of its former. As shown in Figs. 4 and 5, when an electric current flows in a high-frequency coil 22 formed in the sealing jaw 23, a high-frequency electromagnetic field is generated around the high-frequency coil and induces an eddy current in a conductive material such as an aluminum foil, so that heat is generated in the conductive material by the eddy current to heat and melt a thermoplastic resin adjacent to the conductive material. The eddy current thus induced forms a round electric circuit at the two end portions of the conductive material such as the aluminum foil, thereby rounding the heated regions of the two right and left side portions of the tubular packing material 21 and the width of the thermoplastic material layer to be melted at the two end portions is narrowed. As a result, the sealed zone is rounded and narrowed at its two right and left side portions 26 in the longitudinal direction and the width of the sealed zone is made narrower than at its non-side portion 27.

In the present invention, the sealed zone is termed as the heat-sealed zone in which heat and pressure are applied to the thermoplastic resin layers of the innermost faces of the packing material, and the region which is pressed but not heated, or the region which is heated but not pressed, cannot be said the sealed zone. Therefore, when a magnetic member 35 is provided adjacent to the outer side on the container's interior side of the high-frequency coil, the outer edge of the container's interior side of the sealed zone is located on the outer side of the container's interior side of the magnetic member 35. Moreover, in the aforementioned Figs. 4 and 5 and the Figs. 6 and 7 to be described hereinafter, the sealed zone is conveniently laid over the sealing jaw 23, when the sealing jaw is equipped with the U-shaped high-frequency coil 22 so that two portions of the tubular packing material are simultaneously heat-sealed through a portion 28 to be cut. Of the end edge portions of the heat-sealing apparatus of this kind in the direction (or the longitudinal direction of the tube) perpendicular to the longitudinal direction (or the transverse direction of the tube) of the sealed zone, as shown in Figs.4 and 5, one end edge portion 29 is located on the side of a filler such as juice, that is, on the end edge portion 29 of the container's interior side, whereas the other end edge portion 30 is located on the end edge portion 30 of the cutting side for cutting off the containers one by one. Here in this invention, the action face of the high-frequency coil of the pressing member corresponding to said sealed zone may also be conveniently called the sealed zone.

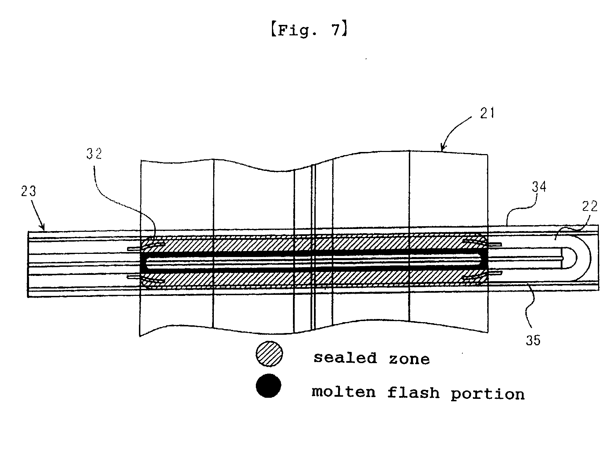

In the high-frequency heat sealing apparatus in the present invention, as the ridge 31 shaped to contain a partial curve formed on the action face of the high-frequency coil, there are no particular limitations as long as it can press the central portion of the sealed zone, including the two right and left side portions where the width of the sealed zone is rounded and narrowed. The aforementioned ridge having the partial curve can be exemplified either by one continuous linear ridge 31 wherein the ridge is formed also on the non-side portion, as shown in Fig. 6, or by two short ridges 32 wherein the ridge is not on the non-side portion but only on the two right and left sides, as shown in Fig. 7. By forming these ridges, it is possible to prevent reliably the sealing from being defective due to formation of a tunnel, as might otherwise be caused either by the two right and left folded ends of the tubular packing material pressed or by the creases (or folds) formed in advance in the packing material. Moreover, the shape of the ridge (press portion) of the present invention can be exemplified as its transverse contour being rectangular, ellipsoidal, or arcuate, however, as shown in Fig. 3, it is preferable for the transverse contour to be arcuate so as to prevent the packing material from being damaged when pressed.

As the groove 34 formed on the action face adjacent to the outer side on the container's interior side of the sealed zone of the high-frequency heat-sealed apparatus in the present invention, there are no particular limitations as long as it can form a molten thermoplastic resin puddle in the region adjacent to the outer side of the sealed zone, and the shape of the groove can be exemplified as its cross section being arcuate, rectangular, ellipsoidal, triangular or the like, but it is preferable to form a groove wherein the cross section is arcuate and its depth is no greater than one half, for example, about one third, of its width. The groove 34 may be corresponded to the continuous or non-continuous portion of the ridge, or may be in one continuous form. When a high-frequency coil in U-shape or the like is formed on the sealing jaw and two portions of the tubular packing material are simultaneously heat-sealed through the portion to be cut, it is preferable, for example, to form two continuous grooves on the action face which is to be both outer sides of the sealed zone.

As to the aforementioned groove 34, it is preferable to set the width and depth of the groove in advance, so that the groove is filled with a thermoplastic resin that flowed out of the sealed zone, and a thermoplastic resin puddle having a width that is even and has no corrugation and a seal edge that is linear is formed, and cracks are not generated from said thermoplastic resin puddle portion with an even width. This thermoplastic resin puddle includes contaminants derived from the sealed zone, and thus it does not contribute as much to sealing performance, but it can be said that it increases the sealing strength. An action face 36 which is inclined in a manner that it broadens the interval of the paired pressing members when pressed as it goes toward the groove direction, between the ridge 31 and groove 34, is preferable, and the action face 36 made to incline between ridge 31 and groove 34 enables the thermoplastic resin that had flown out of the sealed zone to flow smoothly to the groove 34.

In the present invention, the flash portion 33 for the molten thermoplastic resin formed adjacent to the outer side on the cutting side of the high-frequency coil, may be anything which has the structure to guide the molten thermoplastic resin to flow from the sealed zone to the cutting side. As shown in Fig. 3, for example, one constructed in a manner wherein the end edge portion on the cutting side of the action face of a rigid rubber 24 formed on the opposing jaw 25 is contacted to the end edge portion on the cutting side of the action face of a high-frequency coil 22 formed on the sealing jaw 23 can be exemplified. In addition, one constructed as a groove that can form a molten thermoplastic resin puddle provided on the action face adjacent to the outer side on the cutting side of the high-frequency coil can also be used as a flash portion. Since the high-frequency coil side of this molten thermoplastic resin flash portion 33 is heated but not pressed, it enables the molten thermoplastic resin to flow from the sealed zone.

As described hereinbefore, the high-frequency heat-sealing apparatus in the present invention comprises: a ridge 31 shaped to contain a partial curve formed on the action face of a high-frequency coil 22 flush with the action face of a sealing jaw 23, so as to press the central portion of the sealed zone wherein its two right and left sides are rounded and narrowed; a groove 34 equipped so as to form a molten thermoplastic resin puddle on the action face adjacent to the outer side of the container's interior side of the sealed zone; and a flash portion 33 for a molten thermoplastic resin formed adjacent to the outer side on the cutting side of the high-frequency coil. Hereby the thermoplastic resin layer in the innermost face of the packing material in the sealed zone is heated and pressed by the pressing action of the sealing jaw 23 and opposing jaw 25 equipped with a heating mechanism, and the molten thermoplastic resin is pushed to flow towards the container's interior side and cutting side together with the filler such as juice containing water-insoluble vegetable fiber and contaminants such as dirt that had adhered to the surface of the thermoplastic resin layer by being extruded to both sides of the ridge 31, and the molten thermoplastic resin that had been pushed to flow toward the container's interior side flows to the groove 34 and forms a thermoplastic resin puddle, and the molten thermoplastic resin that had been pushed to flow toward the cutting side flows to the flash portion 33 and forms a thermoplastic resin puddle. Consequently, a thin layer of thermoplastic resin having an excellent sealing where there are no contaminants in the sealed zone is formed.

Using the high-frequency heat-sealing apparatus in the present invention enables to achieve excellent heat-sealing, wherein defective sealing is not produced even when heat-sealing under severe conditions with a fluid, such as when filling/packing a vegetable juice abundant in water-insoluble vegetable fiber. The mechanism for achieving this excellent heat-sealing is not clear, however, in the high-frequency heat-sealing apparatus in the present invention, a ridge 31 is equipped in the central portion of the sealed zone whereby the distance from the ridge 31 to the edge end portion of the ridge side of the groove 34 equipped in the container's interior side and the distance from the ridge 31 to the edge end portion of the ridge side of the flash portion 33 equipped in the cutting side are approximately equal, and a groove 34 (preferably a groove 34 that is adjacent to an inclined action face 36) and a flash portion 33 are equipped, whereby the pressure added by the ridge 31 is applied almost equally to the molten thermoplastic resin extruded to both sides of the ridge 31, and the molten thermoplastic resin can be guided to flow without resistance to both outer sides of the sealed zone. Consequently, it is believed that the flow of the molten resin extruded to the container's interior side and the molten resin extruded to the cutting side becomes smoother, thereby attaining a satisfactory heat-sealing even when heat-sealing under severe conditions with a fluid.

### INDUSTRIAL APPLICABILITY

Heat-sealing with the use of a high-frequency heat-sealing apparatus in the present invention enables to achieve excellent heat-sealing, wherein a thin layer of thermoplastic resin having an excellent sealing where there are no contaminants in the sealed zone is formed, and no defective sealing is produced even when heat-sealing under severe conditions with a fluid, such as when filling/packing a vegetable juice or the like abundant in water-insoluble vegetable fiber.

### EXPLANATION OF NUMERALS

- 1: Packing material web
- 2: Liquid supply pipe
- 3: Pillow-shaped container
- 4: Transverse sealing apparatus
- 5: Cutting apparatus
- 6: Box-shaped container
- 10: Vertical rod
- 11: Lift frame
- 12, 13: Rocking arm
- 14, 15: Pressing member
- 16: Arm opening/closing device
- 20: Press apparatus
- 21: Tubular packing material
- 22: High-frequency coil
- 23: Sealing jaw
- 24: Rigid rubber
- 25: Opposing jaw
- 26: Right and left side portions of the longitudinal direction of a sealed zone
- 27: Non-side portion of the longitudinal direction of a sealed zone
- 28: Portion to be cut
- 29: End edge portion on the container's interior side
- 30: End edge portion on the cutting side
- 31: One linear ridge
- 32: Two short ridges
- 33: Flash portion for a thermoplastic resin
- 34: Groove
- 35: Magnetic member
- 36: Inclined action face between a ridge and a groove

## Claims

1. A high-frequency heat-sealing apparatus comprising a pair of openable-and-closable pressing members including a high-frequency heating mechanism for shaping a packing material of a laminate including a thermoplastic resin layer and a conductive material layer into a tubular shape and for heat-sealing said tubular packing material transversely together with a fluid,
wherein a ridge shaped to contain a partial curve is so formed on the action face of a high-frequency coil flush with the action face of one of the pressing members that it can press the central portion of a sealed zone having two rounded and narrowed right and left sides,
wherein a groove is so formed on the action face adjacent to the outer side on the container's interior side of a sealed zone that it can form a molten thermoplastic resin puddle, and
wherein a flash portion for a molten thermoplastic resin is formed adjacent to the outer side on the cutting side of the high-frequency coil.

2. The high-frequency heat-sealing apparatus according to claim 1, wherein the action face between the ridge and groove is inclined so that the interval of the paired pressing members when pressed gradually broadens as it goes toward the groove.

3. The high-frequency heat-sealing apparatus according to claim 1 or 2, further comprising a band-shaped magnetic member provided adjacent to the outer side on the container's interior side of the high-frequency coil.

4. The high-frequency heat-sealing apparatus according to any of claims 1 to 3, wherein the ridge that can press the central portion of a sealed zone is one continuous linear ridge that traverses over the whole area of the longitudinal direction of a sealed zone.

5. The high-frequency heat-sealing apparatus according to any of claims 1 to 4, wherein the transverse contour of the ridge that can press the central portion of a sealed zone is arcuate.

6. The heat-sealing apparatus according to any of claims 1 to 5, wherein the cross section of the groove is arcuate, and the depth of the groove is no greater than one half of its width.

7. A high-frequency heat-sealing apparatus for transversely heat-sealing a tubular-shaped packing material containing a fluid to form a fluid-containing container, and
wherein the packing material is a laminate comprising a thermoplastic resin layer and a conductive material layer, the apparatus comprising:
a pair of openable-and-closable pressing members, each pressing member comprising an action face;
a high-frequency heating mechanism comprising a high-frequency coil flush with the action face of one of the pressing members and having an action face with a ridge thereon shaped to contain a partial curve such that, in use, it can press the central portion of a sealing zone of the packing material having two rounded and narrowed right and left sides;
a groove formed on the action face, and adjacent to the outer side, of said one of the pressing members and on the container's interior side of a sealing zone such that, in use, a molten thermoplastic resin puddle is formed;
a flash portion for molten thermoplastic resin adjacent to the outer side on the cutting side of the high-frequency coil; and
wherein said pressing members do not have a ridge located on the actions faces thereof.
